# EUROPÄISCHE PATENTSCHRIFT

(11) **EP 3 855 147 B1**
(45) Veröffentlichungstag und Bekanntmachung des Hinweises auf die Patenterteilung: **08.10.2025**
(21) Anmeldenummer: 21150140.8
(22) Anmeldetag: 05.01.2021
(51) Int. Cl.: G01K 17/10, G01F 1/66, G01F 1/667, G01F 15/075

(54) **ENERGIEZÄHLER UND VERFAHREN ZUR ERFASSUNG EINER WÄRME- ODER KÄLTEMENGE**
ENERGY MEASURER AND PROCESS FOR DETERMINATION OF A HEATING OR COOLING QUANTITY
COMPTEUR D'ÉNERGIE ET PROCÉDÉ DE DÉTERMINATION D'UNE QUANTITÉ DE CHALEUR OU DE FROID

(30) Priorität: 22.01.2020 DE 102020200749
(43) Veröffentlichungstag der Anmeldung: 28.07.2021
(73) Patentinhaber: Landis+Gyr GmbH, 90459 Nürnberg (DE)
(72) Erfinder: Faißt, Andreas, 90461 Nürnberg (DE); Schädlich, Marcus, 90765 Fürth (DE)
(74) Vertreter: Marks & Clerk LLP

(56) Entgegenhaltungen:
- EP-A1- 3 199 932
- ISTA: "Maximum precision and reliability ultego III", 15 July 2019 (2019-07-15), XP055810946, Retrieved from the Internet <URL:https://stockshed.uk/files/ista/ista_ultego_III.pdf> [retrieved on 20210607]

## Beschreibung

Die Erfindung betrifft einen Energiezähler sowie ein Verfahren zur schallbasierten Erfassung einer mittels eines Transportmediums an einen Verbraucher gelieferten Wärme- oder Kältemenge.

Ein derartiger Energiezähler ist beispielsweise aus der DE 10 2007 014 810 B3 bekannt. Er kann als Wärme- oder Kältezähler ausgeführt sein, welcher die an den Verbraucher gelieferte Wärme- oder Kältemenge, also die gelieferte Energie, u.a. auf Grundlage der (Ultra-)Schallmesstechnik erfasst. Impulsförmige (Ultra-)Schallsignale werden mittels (Ultra-)Schallwandlern erzeugt sowie in Flussrichtung und entgegen der Flussrichtung durch das Transportmedium gesendet. Der Unterschied der Laufzeiten der Schallsignale in beiden Laufrichtungen wird zur Ermittlung der Durchflussmenge des Transportmediums ausgewertet. Diese (ultra-)schallbasierte Erfassung der Durchflussmenge oder -rate arbeitet nach dem Laufzeitdifferenzprinzip. Zusätzlich wird die Temperatur des Transportmediums mittels zweier Temperatursensoren einmal vor dem Verbraucher als Vorlauftemperatur und einmal nach dem Verbraucher als Rücklauftemperatur ermittelt. Aus der Temperaturdifferenz zwischen Vor- und Rücklauftemperatur sowie aus der Durchflussmenge lässt sich dann die gelieferte Wärme- oder Kältemenge ermitteln, welche z.B. auch als Grundlage für die Abrechnung dienen kann. Moderne Energiezähler haben eine elektronische Steuerung und Auswertung, die eine elektrische Energieversorgung benötigt. Letztere kann batterie- oder akkugestützt ausgeführt sein, wodurch von Zeit zu Zeit eine Wartung zum Austausch der Batterie oder zum Laden des Akkus erforderlich ist. Insofern ist es vorteilhaft, den Bedarf an elektrischer Versorgungsenergie gering zu halten.

In der DE 10 2018 003 671 A1 wird ein Energiezähler zur Erfassung der Kälte- und/oder Wärmemenge eines Fluids beschrieben, wobei ein Mittel zur Bestimmung der Temperatur des Energiezählers vorgesehen ist. Die so ermittelte Temperatur wird zur automatischen Festlegung verwendet, ob sich mindestens ein zusätzlich vorhandener Temperaturfühler im Vorlauf oder Rücklauf befindet. Dadurch können Einbaufehler vermieden werden.

In der EP 2 581 716 A1 wird ein ultraschall-basierter Durchflussmesser beschrieben, bei dem die durch Auswertung der Ultraschall-Signale gemessene Durchflussrate entsprechend der Temperatur des überwachten Fluids korrigiert wird. Dabei wird die Temperatur des Fluids meistens indirekt aus der Ultraschall-Laufzeit sowie zu einzelnen Zeitpunkten direkt durch eine Temperaturmessung ermittelt. So kann der Energieverbrauch niedrig gehalten werden.

In der EP 3 199 932 B1 wird ein Verbrauchsmesser zur Erfassung einer mittels eines Fluids an eine Verbrauchsstelle gelieferten und dort verbrauchten Energiemenge beschrieben. Der Verbrauchsmesser erfasst eine Durchflussrate sowie eine Vorlauf- und eine Rücklauftemperatur des Fluids. Je nach Änderung der Durchflussrate und/oder der Vorlauf- oder der Rücklauftemperatur einerseits und je nach aktueller Energiebilanz der Energiequelle des Verbrauchsmessers andererseits wird eine Temperaturerfassungsfrequenz verändert, um so die Lebensdauer der Energiequelle (z.B. einer elektrischen Batterie) zu verlängern.

In der Produkt-Broschüre der Ista "Maximum precision and reliability - ultego III" wird ein Wärmezähler beschrieben, bei dem die Durchflussmenge des Transportmediums in einem festen Zeitabstand von vier Sekunden und die Temperatur des Transportmediums in einem Zeitabstand von vier oder sechzig Sekunden erfasst wird. Bei einer sprunghaften Veränderung der Durchflussmenge von beispielsweise mehr als 30% wird der Zeitabstand bei der Temperaturerfassung auf den kürzeren Weg von vier Sekunden umgestellt.

Eine Aufgabe der Erfindung besteht darin, einen Energiezähler der eingangs bezeichneten Art mit gegenüber dem Stand der Technik verbesserten Eigenschaften anzugeben.

Zur Lösung dieser Aufgabe wird ein Energiezähler entsprechend den Merkmalen des Patentanspruchs 1 angegeben. Der erfindungsgemäße Energiezähler hat einen ersten und einen zweiten Schallwandler jeweils zur Übermittlung von Schallsignalen durch das Transportmedium zum jeweils anderen Schallwandler, einen ersten Temperatursensor für einen Vorlauf des Transportmediums und einen zweiten Temperatursensor für einen Rücklauf des Transportmediums und eine Steuer- und Auswerteeinheit, an die der erste und der zweite Schallwandler sowie der erste und der zweite Temperatursensor anschließbar sind. Dabei ist die Steuer- und Auswerteeinheit dazu ausgelegt, (insbesondere zyklisch) zeitlich wiederkehrend Schalllaufzeiten oder Schallgeschwindigkeiten der Schallsignale innerhalb des Transportmediums zu ermitteln, zeitlich wiederkehrend Sensor-Temperaturerfassungen mittels des ersten und des zweiten Temperatursensors vorzunehmen, eine thermische Sondersituation mit einer sprunghaften Temperaturveränderung im Transportmedium oder des Transportmediums mittels einer von der Sensor-Temperaturerfassung verschiedenen (insbesondere zyklisch) zeitlich wiederkehrenden Temperatur-Hilfsgrößenerfassung zu erkennen, die zeitlich wiederkehrenden Sensor-Temperaturerfassungen nach Erkennung einer sprunghaften Temperaturveränderung mit einem kürzeren Zeitabstand (insbesondere als unter Normalbedingung) vorzunehmen, und bei der Temperatur-Hilfsgrößenerfassung eine Temperaturabhängigkeit der ermittelten Schalllaufzeit oder Schallgeschwindigkeit auszuwerten.

Die Steuer- und Auswerteeinheit ist insbesondere dazu ausgelegt, Messwerte zur Schalllaufzeit oder Schallgeschwindigkeit sowie zur Vorlauf- und Rücklauftemperatur in bestimmten zeitlichen Abständen zu erfassen bzw. erfassen zu lassen und auszuwerten. Weiterhin ist sie insbesondere dazu ausgelegt, Durchflussmengen des Transportmediums zu ermitteln, die vorzugsweise zumindest aus einem Teil der ermittelten Schalllaufzeiten oder Schallgeschwindigkeiten der Schallsignale innerhalb des Transportmediums abgeleitet sind, beispielsweise entsprechend dem Laufzeitdifferenzprinzip

Es wurde erkannt, dass der Bedarf an elektrischer Versorgungsenergie erheblich reduziert werden kann, wenn die Sensor-Temperaturerfassungen nicht wie bisher mit einem stets einheitlichen, fest vorgegebenen Zeitabstand durchgeführt werden. Demgegenüber ist es günstiger, wenn die Sensor-Temperaturerfassungen unter Normalbedingungen seltener, also mit einem längeren Zeitabstand (= Normal-Zeitabstand), erfolgen als in einer thermischen Sondersituation, in der sich die Temperaturverhältnisse im Transportmedium sprunghaft ändern bzw. geändert haben, und in der insofern außergewöhnliche Temperaturverhältnisse herrschen. Nach Erkennen einer sprunghaften Temperaturveränderung wird der Zeitabstand zwischen zwei mittels der beiden Temperatursensoren durchgeführten Temperaturmessungen verkürzt. Die Temperaturmessungen werden dann mit einem Sonder-Messraster durchgeführt, das einen Sonder-Zeitabstand zwischen zwei zeitlich aufeinander folgenden Temperaturmessungen hat, der kürzer ist als ein Normal-Zeitabstand des ansonsten verwendeten Normal-Messrasters. Das Messraster der Sensor-Temperaturerfassung verändert sich also vorzugsweise. Es ist insbesondere adaptiv. Abgesehen von den Umstellungen zwischen dem Normal-Zeitabstand und dem Sonder-Zeitabstand ist das zeitliche Wiederkehren der Sensor-Temperaturerfassungen insbesondere zyklisch. Es ist also insbesondere zeitweise zyklisch.

Bei dem erfindungsgemäßen Energiezähler erfolgen die Sensor-Temperaturerfassungen vorteilhafterweise nur dann zeitlich kürzer getaktet, also mit dem Sonder-Zeitabstand, wenn eine thermische Sondersituation im Transportmedium erkannt worden ist. Dieser energieintensive Modus der Sensor-Temperaturerfassung kommt insbesondere nur vergleichsweise selten vor, so dass die für die Sensor-Temperaturerfassung benötigte elektrische Versorgungsenergie meistens niedrig und nur in Ausnahmefällen höher ist. Dadurch wird der Verbrauch an elektrischer Versorgungsenergie optimiert und insbesondere auch reduziert.

Außerdem ergibt sich so eine höhere Erfassungsgenauigkeit, da Änderungen der Temperaturverhältnisse im Transportmedium oft einhergehen mit einer Änderung der durch den Energiezähler zu erfassenden an den Verbraucher gelieferten Wärme- oder Kältemenge. Solche abrechnungsrelevanten Änderungen im Energiefluss könnten andernfalls bei durchgängiger Verwendung des Normal-Messrasters übersehen oder zu spät erkannt werden, wodurch Erfassungsungenauigkeiten und als Folge davon Abrechnungsungenauigkeiten resultieren könnten. Derartige Ungenauigkeiten treten beim erfindungsgemäßen Energiezähler aufgrund des vorteilhaften adaptiven Messrasters der Sensor-Temperaturerfassung nicht auf.

Der erfindungsgemäße Energiezähler bietet somit einen sehr guten Kompromiss zwischen hoher Erfassungsgenauigkeit einerseits und niedrigem Verbrauch an elektrischer Versorgungsenergie andererseits.

Dadurch, dass die Steuer- und Auswerteeinheit dazu ausgelegt ist, die sprunghafte Temperaturveränderung mittels einer von der Sensor-Temperaturerfassung verschiedenen zeitlich wiederkehrenden Temperatur-Hilfsgrößenerfassung zu erkennen, kann eine thermische Sondersituation schneller und insbesondere auch unabhängig von dem nächsten Erfassungszeitpunkt im aktuell geltenden Messraster der Sensor-Temperaturerfassung erkannt werden.

Insbesondere ist die Steuer-und Auswerteeinheit dazu ausgelegt, die maßgebliche sprunghafte Temperaturveränderung des Transportmediums für eine Stelle zu ermitteln, die an einem Einbauort des ersten und/oder des zweiten Schallwandlers liegt oder zumindest in der Nähe davon. Diese Stelle kann sich vorzugsweise auch am Einbauort des zweiten Temperatursensors für den Rücklauf oder zumindest in der Nähe dieses Einbauortes befinden.

Normalbedingung bedeutet hier insbesondere das Vorliegen einer Betriebssituation, in der keine sprunghafte Temperaturveränderung im Transportmedium erkannt worden ist oder gegeben ist. Das Transportmedium ist insbesondere flüssig oder gasförmig. Vorzugsweise handelt es sich um Wasser.

Die Erkennung einer sprunghaften Temperaturänderung erfolgt indirekt anhand eines Vergleichs von zeitlich aufeinander folgenden Werten einer Temperatur-Hilfsgröße. Im Rahmen der Temperatur-Hilfsgrößenerfassung erfolgt keine direkte Temperaturerfassung oder -messung. Stattdessen ist die Steuer-und Auswerteeinheit dazu ausgelegt, im Rahmen der Temperatur-Hilfsgrößenerfassung eine von der Temperatur verschiedene andere Mess- oder Eingangsgröße zu verwenden und/oder auszuwerten. Falls überhaupt tatsächliche Temperaturwerte ausgewertet werden, werden letztere insbesondere indirekt, vorzugsweise über eine vorangestellte Auswertung dieser anderen Mess- oder Eingangsgröße, ermittelt. Eine solche indirekt ermittelte und danach zur Erkennung eines relevanten Temperatursprungs ausgewertete Temperatur ist hier insbesondere als ein Beispiel einer Temperatur-Hilfsgröße zu verstehen.

Insbesondere ist die Steuer- und Auswerteeinheit dazu ausgelegt, eine Temperatur-Hilfsgröße aus der ermittelten Schalllaufzeit oder Schallgeschwindigkeit unter Auswertung einer Temperaturabhängigkeit der Schalllaufzeit oder Schallgeschwindigkeit zu ermitteln. Für diese Ermittlung ist insbesondere keine zusätzliche Messung erforderlich. Es kann auf die im Rahmen der Ermittlung der Durchflussmengen ohnehin benötigten und damit bereits vorhandenen oder noch zu erfassenden Messwerte der beiden Schallwandler zurückgegriffen werden. Dies ist besonders (energie-)effizient. Die Durchführung zusätzlicher Messungen ist aber grundsätzlich ebenfalls möglich, was beispielsweise zu einer schnelleren oder genaueren Erkennung eines relevanten Temperatursprungs führen kann. Die im Rahmen der Temperatur- Hilfsgrößenerfassung verwendete und/oder ausgewertete insbesondere von der Temperatur verschiedene andere Mess- oder Eingangsgröße ist also vorzugsweise zumindest eines der Schallsignale oder zumindest eine daraus ermittelte bzw. abgeleitete Schalllaufzeit oder Schallgeschwindigkeit. Die Erkenntnis über das Vorliegen einer sprunghaften Temperaturveränderung im Transportmedium oder des Transportmediums liefert vorzugsweise eine weitere Auswertung der ermittelten Temperatur-Hilfsgröße. Als eine mögliche Temperatur-Hilfsgröße kann z.B. auch ein in der Steuer- und Auswerteeinheit anhand der Mess- oder Eingangsgröße ermittelter (aber insbesondere eben nicht direkt gemessener) tatsächlicher Temperaturwert weiter ausgewertet werden.

Vorteilhafte Ausgestaltungen des erfindungsgemäßen Energiezählers ergeben sich aus den Merkmalen der von Anspruch 1 abhängigen Ansprüche.

Gemäß einer weiteren günstigen Ausgestaltung ist die Steuer- und Auswerteeinheit dazu ausgelegt, bei der Temperatur-Hilfsgrößenerfassung eine Temperaturabhängigkeit zumindest einer der Größen aus einer Resonanzfrequenz zumindest eines der beiden Schallwandler, einer Signalamplitude eines elektrischen Empfangssignals zumindest eines der beiden Schallwandler und einer Einhüllenden eines elektrischen Empfangssignals zumindest eines der beiden Schallwandler auszuwerten. Durch zusätzliche Auswertung der Temperaturabhängigkeit dieser Resonanzfrequenz und/oder der Temperaturabhängigkeit dieser Signalamplitude und/oder der Temperaturabhängigkeit dieser Einhüllenden lässt sich insbesondere eine Mehrdeutigkeit der Temperaturabhängigkeit der Schalllaufzeit oder Schallgeschwindigkeit beheben. Vorzugsweise liefert die Temperatur-Hilfsgrößenerfassung dann stets ein eindeutiges Resultat.

Gemäß einer weiteren günstigen Ausgestaltung ist die Steuer- und Auswerteeinheit dazu ausgelegt, die zeitlich wiederkehrende Ermittlung der Schalllaufzeiten oder Schallgeschwindigkeiten in einem kürzeren Zeitabstand vorzunehmen als die zeitlich wiederkehrenden Sensor-Temperaturerfassungen unter Normalbedingungen. So besteht die Möglichkeit, eine sprunghafte Temperaturveränderung schnell und insbesondere auch außerhalb des gerade aktuellen Messrasters der Sensor-Temperaturerfassung zuerkennen.

Gemäß einer weiteren günstigen Ausgestaltung ist die Steuer- und Auswerteeinheit dazu ausgelegt, zumindest einen Teil der Schalllaufzeiten oder Schallgeschwindigkeiten ausschließlich für die Temperatur-Hilfsgrößenerfassung zu ermitteln und auszuwerten. Dadurch resultiert eine schnellere oder genauere Erkennung eines relevanten Temperatursprungs im Transportmedium oder des Transportmediums.

Gemäß einer weiteren günstigen Ausgestaltung ist die Steuer- und Auswerteeinheit dazu ausgelegt, bei den zeitlich wiederkehrenden Sensor-Temperaturerfassungen von der Verwendung des kürzeren Zeitabstands (= des Sonder-Zeitabstands) nach Erkennung einer sprunghaften Temperaturveränderung wieder umzustellen auf die Verwendung eines längeren Zeitabstands (= des Normal-Zeitabstands). Als Kriterium für die Um- oder Zurückstellung auf den Normal-Zeitabstand kann insbesondere der Ablauf einer fest vorgegebenen oder wählbaren Zeitspanne, z.B. von einer Minute oder von zwei Minuten, oder das Ende der sprunghaften Temperaturveränderung(en) dienen. Die Verwendung des Sonder-Zeitabstands ist also insbesondere zeitlich begrenzt. Dies ist günstig im Hinblick auf den Bedarf an elektrischer Versorgungsenergie.

Gemäß einer weiteren günstigen Ausgestaltung ist die Steuer- und Auswerteeinheit dazu ausgelegt, den nach Erkennung einer sprunghaften Temperaturveränderung bei den zeitlich wiederkehrenden Sensor-Temperaturerfassungen verwendeten kürzeren Zeitabstand auf einen Wert einzustellen, der um einen Faktor im Bereich zwischen 2 und 20, insbesondere zwischen 5 und 10, kleiner ist als unter Normalbedingungen. So ergibt sich ein besonders vorteilhafter Kompromiss zwischen hoher Erfassungsgenauigkeit und niedrigem Verbrauch von elektrischer Versorgungsenergie.

Gemäß einer weiteren günstigen Ausgestaltung ist die Steuer- und Auswerteeinheit dazu ausgelegt, eine Temperaturveränderung des Transportmediums als eine sprunghafte zu erkennen, wenn sie mindestens 10 K (Kelvin), insbesondere mindestens 5 K, vorzugsweise mindestens 2,5 K beträgt. Dann ist sicher gestellt, dass der Energiezähler einerseits jeden relevanten Temperatursprung erkennt, aber andererseits auch nicht unnötig im energieintensiven Sonder-Messraster der Sensor-Temperaturerfassung betrieben wird. Letzteres geschieht vorteilhafterweise nur dann, wenn tatsächlich eine maßgebliche thermische Sondersituation vorliegt. Obwohl ein solcher Temperatursprung prinzipiell beliebig hoch sein kann, wird er in der Praxis üblicherweise höchstens 75 K, insbesondere höchstens 130 K und vorzugsweise höchstens 180 K betragen. Die Steuer- und Auswerteeinheit ist insbesondere dazu ausgelegt, dass zur Erkennung einer sprunghaften Temperaturveränderung ein aktuell ermittelter Wert einer Temperatur-Hilfsgröße mit dem letzten zeitlich vorher ermittelten und vorzugsweise gespeicherten Wert der Temperatur-Hilfsgröße verglichen wird, z.B. im Rahmen einer Differenzbildung. Eine dabei festgestellte Abweichung ist dann vorzugsweise ein Maß für eine Temperaturveränderung im Transportmedium oder des Transportmediums. Sind diese festgestellten Abweichungen entsprechend hoch, wird in der Steuer- und Auswerteeinheit insbesondere das Vorliegen einer thermischen Sondersituation mit einem Temperatursprung im Transportmedium oder des Transportmediums, der die vorstehend genannten Kelvin-Angaben erfüllt, festgestellt bzw. erkannt, woraufhin dann vorzugsweise auch die Umstellung des Messrasters der Sensor-Temperaturerfassung veranlasst wird. Es ist beispielsweise möglich, dass im Rahmen der Erkennung einer sprunghaften Temperaturveränderung zeitlich nacheinander ermittelte tatsächliche Temperaturwerte miteinander verglichen werden. Diese tatsächlichen Temperaturwerte sind dann aber insbesondere keine direkten Messwerte, sondern vorzugsweise im Rahmen der Temperatur-Hilfsgrößenerfassung indirekt ermittelte bzw. abgeleitete Werte.

Eine weitere Aufgabe der Erfindung besteht darin, ein Verfahren der eingangs bezeichneten Art mit gegenüber dem Stand der Technik verbesserten Eigenschaften anzugeben.

Zur Lösung der das Verfahren betreffenden Aufgabe wird ein Verfahren entsprechend den Merkmalen des Anspruchs 8 angegeben. Bei dem erfindungsgemäßen Verfahren werden innerhalb des Transportmediums Schallsignale zwischen einem ersten und einem zweiten Schallwandler übermittelt, im Rahmen einer (insbesondere zeitweise zyklisch) zeitlich wiederkehrenden Sensor-Temperaturerfassung jeweils eine Vorlauftemperatur des Transportmediums mittels eines ersten Temperatursensors und eine Rücklauftemperatur des Transportmediums mittels eines zweiten Temperatursensors bestimmt sowie (insbesondere zyklisch) zeitlich wiederkehrend Schalllaufzeiten oder Schallgeschwindigkeiten der Schallsignale innerhalb des Transportmediums ermittelt. Weiterhin wird eine thermische Sondersituation mit einer sprunghaften Temperaturveränderung im Transportmedium oder des Transportmediums mittels einer von der Sensor-Temperaturerfassung verschiedenen (insbesondere zyklisch) zeitlich wiederkehrenden Temperatur-Hilfsgrößenerfassung erkannt, werden die zeitlich wiederkehrenden Sensor-Temperaturerfassungen nach Erkennung einer sprunghaften Temperaturveränderung mit einem kürzeren Zeitabstand (insbesondere als unter Normalbedingung) vorgenommen, und bei der Temperatur-Hilfsgrößenerfassung wird eine Temperaturabhängigkeit der ermittelten Schalllaufzeit oder Schallgeschwindigkeit ausgewertet.

Das erfindungsgemäße Verfahren hat im Wesentlichen vergleichbare günstige Ausgestaltungen wie der erfindungsgemäße Energiezähler. Das erfindungsgemäße Verfahren und seine günstigen Ausgestaltungen bieten im Wesentlichen die gleichen Vorteile, die bereits im Zusammenhang mit dem erfindungsgemäßen Energiezähler und dessen günstigen Ausgestaltungen beschrieben worden sind.

Auch beim Verfahren werden insbesondere Durchflussmengen des Transportmediums ermittelt, die vorzugsweise zumindest aus einem Teil der ermittelten Schalllaufzeiten oder Schallgeschwindigkeiten der Schallsignale innerhalb des Transportmediums abgeleitet werden, beispielsweise entsprechend dem Laufzeitdifferenzprinzip.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: eine schematische Darstellung eines eingebauten Energiezählers mit einer Sensor-Temperaturerfassung mit adaptivem Messraster,
- Fig. 2: Zeitverläufe der mittels der Energiezählers gemäß Fig. 1 erfassten Vor- und Rücklauftemperatur mit einer sprunghaften Temperaturveränderung und einer daraus resultierenden Änderung des Messrasters,
- Fig. 3 und 4: Ablaufdiagramme für die Erfassung von Messwerten und für die Ermittlung daraus abgeleiteter Größen mit dem Normal-Messraster sowie mit dem Sonder-Messraster gemäß einem ersten Ausführungsbeispiel,
- Fig. 5 und 6: Ablaufdiagramme für die Erfassung von Messwerten und für die Ermittlung daraus abgeleiteter Größen mit dem Normal-Messraster sowie mit dem Sonder-Messraster gemäß einem zweiten Ausführungsbeispiel,
- Fig. 7: ein Diagramm mit dem Verlauf der Schallgeschwindigkeit aufgetragen über der Temperatur, und
- Fig. 8: ein Diagramm mit einem numerisch nachgebildeten Verlauf der Abhängigkeit zwischen Schallgeschwindigkeit und Temperatur zur Verwendung bei der Temperatur-Hilfsgrößenerfassung anhand der messtechnisch ermittelten Schallgeschwindigkeit.

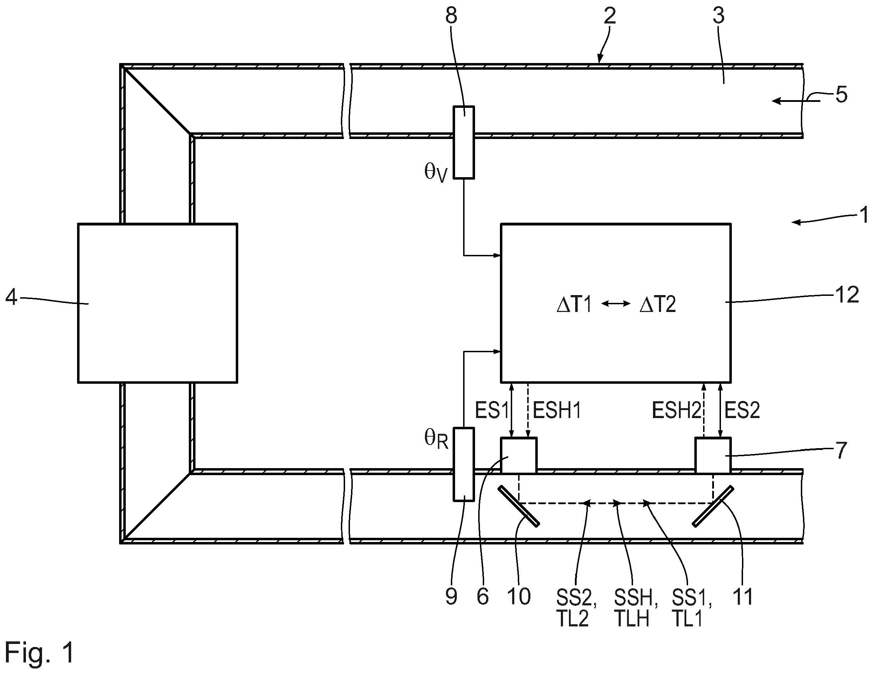

Einander entsprechende Teile sind in den Fig. 1 bis 8 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

In Fig. 1 ist ein Ausführungsbeispiel eines Energiezählers 1, der insbesondere als Wärmezähler ausgestaltet und in ein Rohrsystem 2 eingebaut ist, gezeigt. In dem Rohrsystem 2 befindet sich ein Transportmedium 3, beispielsweise eine Flüssigkeit wie Wasser, mittels dessen thermische Energie, hier Wärme, an einen Verbraucher 4 geliefert wird. Das Transportmedium 3 durchfließt das Rohsystem mit einer Flussrichtung 5.

Der Energiezähler 1 hat mehrere Sensoren zur Erfassung von Messwerten, insbesondere einen ersten Schallwandler 6 und einen zweiten Schallwandler 7 sowie einen ersten Temperatursensor 8 zur messtechnischen Erfassung einer Vorlauftemperatur θV und einen zweiten Temperatursensor 9 zur messtechnischen Erfassung einer Rücklauftemperatur θR. In Flussrichtung 5 gesehen, ist der erste Temperatursensor 8 vor und der zweite Temperatursensor 9 nach dem Verbraucher 4 in das Rohsystem 2 eingebaut. Der zweite Temperatursensor 9 ist außerdem in der Nähe der beiden Schallwandler 6, 7 eingebaut.

Der erste Schallwandler 6 erzeugt ein erstes Schallsignal SS1 und sendet es insbesondere über zwei im Inneren des Rohrsystems 2 platzierte Umlenkspiegel 10, 11 zu dem zweiten Schallwandler 7, wo es empfangen wird und in einen Empfangs-Anteil eines elektrischen Signals ES2 umgewandelt wird. Der zweite Schallwandler 7 erzeugt ein zweites Schallsignal SS2 und sendet es insbesondere über die beiden Umlenkspiegel 10, 11 zu dem ersten Schallwandler 6, wo es empfangen und in einen Empfangs-Anteil eines elektrischen Signals ES1 umgewandelt wird. Das Transportmedium 3 wird von dem ersten Schallsignal SS1 mit einer ersten Schalllaufzeit TL1 in Flussrichtung 5 und von dem zweiten Schallsignal SS2 mit einer zweiten Schalllaufzeit TL2 entgegen der Flussrichtung 5 durchlaufen. Wegen dieser unterschiedlichen Orientierung der zugehörigen Schallsignale SS1 und SS2 in Bezug auf die Flussrichtung 5 unterscheiden sich die erste Schalllaufzeit TL1 und die zweite Schalllaufzeit TL2 voneinander. Ihre Differenz ist ein Maß für die Durchflussrate bzw. die Durchflussmenge ΔV des Transportmediums 3.

Eine entsprechende Auswertung erfolgt in einer Steuer- und Auswerteeinheit 12, welche ebenfalls Bestandteil des Energiezählers 1 ist und an welche die beiden Schallwandler 6, 7 sowie die beiden Temperatursensoren 8, 9 insbesondere lösbar angeschlossen sind. Die Steuer- und Auswerteeinheit 12 ist eine elektronische Einheit, welche die Messwerte zu den Schalllaufzeiten TL1, TL2 wiederkehrend in bestimmten zeitlichen Abständen erfassen lässt und auswertet. Hierzu steuert sie die beiden Schallwandler 6, 7 jeweils mit einem Sende-Anteil des entsprechenden der beiden elektrischen Signale ES1, ES2 an, um dort die Erzeugung der vorzugsweise impulsförmigen Schallsignale SS1, SS2 zu veranlassen. Anhand der daraufhin resultierenden Empfangs-Anteile der beiden elektrischen Signale ES1, ES2 erfolgt in der Steuer- und Auswerteeinheit 12 eine Auswertung zur angesprochenen schalllaufzeitbasierten Ermittlung der aktuellen Durchflussmenge des Transportmediums 3.

Auch die von den Temperatursensoren 8, 9 generierten Messwerte der Vorlauftemperatur θV und der Rücklauftemperatur θR werden von der Steuer-und Auswerteeinheit 12 wiederkehrend in bestimmten zeitlichen Abständen erfasst und ausgewertet.

Anhand der Temperaturdifferenz zwischen der Vorlauftemperatur θV und der Rücklauftemperatur θR sowie anhand der Durchflussmenge ΔV wird in der Steuer- und Auswerteeinheit 12 die an den Verbraucher 4 gelieferte Wärmemenge ermittelt, welche dann auch als Grundlage für die Abrechnung dienen kann.

Um den Energiebedarf der Steuer- und Auswerteeinheit 12 so gering wie möglich zu gestalten, erfolgt die Sensor-Temperaturerfassung mit zwei verschiedenen zeitlichen Messrastern, welche sich in den Zeitabständen zwischen zwei aufeinander folgenden Messwerterfassungen unterscheiden. Das üblicherweise und unter thermischen Normalbedingungen verwendete erste Messraster, das Normal-Messraster, hat einen Normal-Zeitabstand ΔT1, der länger ist als ein Sonder-Zeitabstand ΔT2 des zweiten Messrasters, des Sonder-Messrasters. Umgekehrt ist der Sonder-Zeitabstand ΔT2 kürzer als der Normal-Zeitabstand ΔT1. Die Steuer- und Auswerteeinheit 12 ist dazu ausgelegt, bei den Sensor-Temperaturerfassungen zwischen einer Verwendung des Normal-Messrasters und der des Sonder-Messrasters - in beiden Richtungen - umzuschalten.

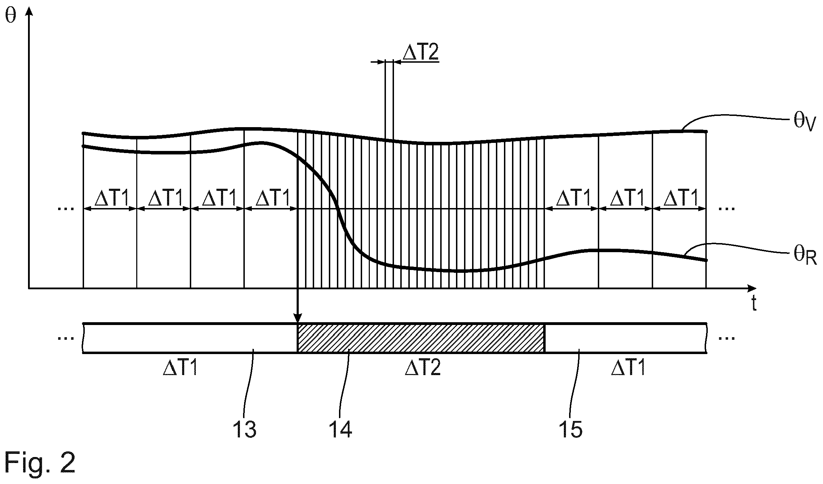

Weitere Details hierzu sind der Darstellung gemäß Fig. 2 mit den dort gezeigten gemessenen Verläufen der Vorlauftemperatur θV und der Rücklauftemperatur θR über der Zeit t zu entnehmen.

Anfangs liegt der Verlauf der Rücklauftemperatur θR nur knapp unter dem der Vorlauftemperatur θV, woraus z.B. geschlossen werden kann, dass der Verbraucher 4 nur wenig der antransportierten Wärmeenergie entnimmt. Die Sensor-Temperaturerfassung erfolgt während dieser ersten in Fig. 2 dargestellten Zeitspanne 13, während der im Transportmedium 3 thermische Normalbedingungen herrschen, und während der insbesondere keine maßgeblichen Temperaturveränderungen stattfinden, mit dem Normal-Messraster. Zwei zeitlich aufeinander folgende Sensor-Temperaturerfassungen liegen im Normal-Zeitabstand ΔT1 auseinander.

Dann ändern sich die Temperaturverhältnisse im Transportmedium 3. Die Rücklauftemperatur θR fällt relativ stark ab, um sich danach auf einem niedrigeren Niveau wieder zu stabilisieren. Eine mögliche Erklärung hierfür ist, dass der Verbraucher 4 die Wärmeentnahme steigert. Die Sensor-Temperaturerfassung erfolgt während dieser zweiten in Fig. 2 dargestellten Zeitspanne 14, während der zumindest zu Beginn eine thermische Sondersituation mit einer maßgeblichen sprunghaften Temperaturveränderung im Transportmedium 3 vorliegt, mit dem Sonder-Messraster. Zwei zeitlich aufeinander folgende Sensor-Temperaturerfassungen liegen während dieser zweiten Zeitspanne im Sonder-Zeitabstand ΔT2 auseinander, welcher erheblich kürzer ist als der Normal-Zeitabstand ΔT1. Im gezeigten Ausführungsbeispiel beträgt die Normal-Zeitabstand ΔT1 insbesondere 32 Sekunden, wohingegen die Sonder-Zeitabstand ΔT2 insbesondere 4 Sekunden beträgt, also um den Faktor 8 kleiner ist als der Normal-Zeitabstand ΔT1.

Während der sich anschließenden dritten in Fig. 2 dargestellten Zeitspanne 15 liegen wieder thermische Normalbedingungen mit stabilen Temperaturverhältnissen im Transportmedium 3 vor. Die Sensor-Temperaturerfassung erfolgt dann wieder im Normal-Messraster mit dem Normal-Zeitabstand ΔT1. Die Rückstellung auf das Normal-Messraster erfolgt bei dem in Fig. 2 gezeigten Ausführungsbeispiel nach Ablauf einer hier fest vorgegebenen Zeitspanne von insbesondere einer Minute. Das Rückstellungs-Kriterium ist hier also der Zeitablauf. Bei einem nicht gezeigten alternativen Ausführungsbeispiel erfolgt die Rückstellung auf das Normal-Messraster nicht nach Zeitablauf. Stattdessen wird als alternatives Rückstellungs-Kriterium geprüft, ob noch sprunghafte Temperaturveränderungen gegeben sind. Sobald dies nicht mehr der Fall ist, erfolgt die Rückstellung auf das Normal-Messraster.

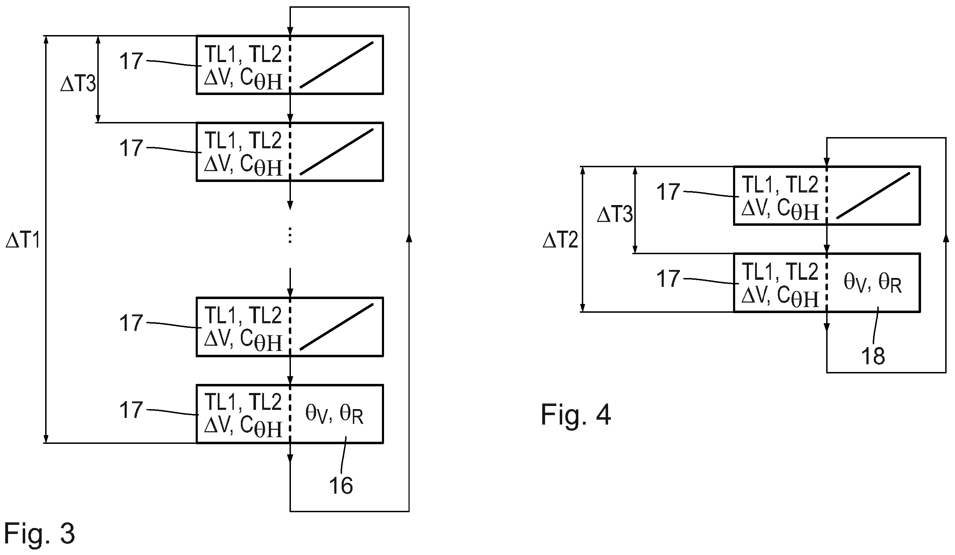

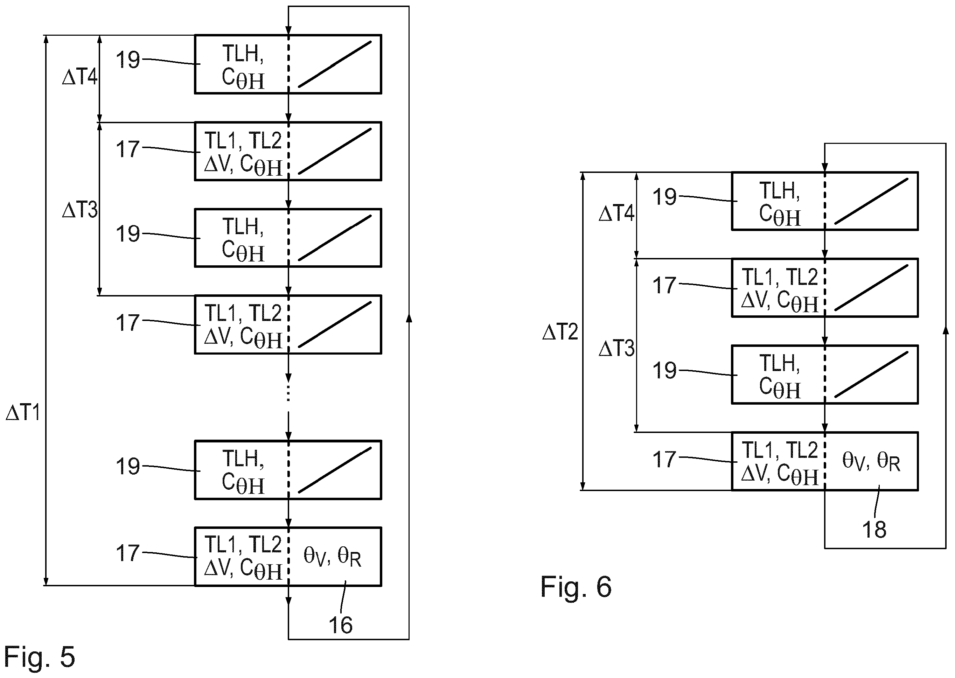

Die Sensor-Temperaturerfassung hat bei dem Energiezähler 1 also ein adaptives Messraster. Die Verhältnisse und insbesondere die Abfolge der Erfassungen der verschiedenen Messwerte im Normal-Messraster mit dem Normal-Zeitabstand ΔT1 sowie im Sonder-Messraster mit dem Sonder-Zeitabstand ΔT2 sind in den beiden Ausführungsbeispielen gemäß Fig. 3 (Normal-Messraster) und Fig. 4 (Sonder-Messraster) einerseits und gemäß Fig. 5 (Normal-Messraster) und Fig. 6 (Sonder-Messraster) andererseits näher dargestellt. Gezeigt sind jeweils Ablaufdiagramme.

Im Normal-Messraster gemäß Fig. 3 erfolgt die Erfassung der Vorlauftemperatur θV und der Rücklauftemperatur θR wiederkehrend mit einem Normal-Zeitabstand ΔT1. Der zugehörige Temperatur-Erfassungsschritt ist in Fig. 3 mit dem Bezugszeichen 16 gekennzeichnet. Zwischen zwei Temperatur-Erfassungsschritten 16 werden in mehreren insbesondere ebenfalls zeitlich zyklisch wiederkehrenden Volumen-Erfassungsschritten 17 die jeweiligen ersten und zweiten Schalllaufzeiten TL1 und TL2 und - daraus abgeleitet - Durchflussmengen ΔV sowie Temperatur-Hilfsgrößen CθH (siehe hierzu nachfolgend) ermittelt. Ein Volumen-Zeitabstand ΔT3 zwischen zwei zeitlich aufeinander folgenden Volumen-Erfassungsschritten 17 ist erheblich kleiner als der Normal-Zeitabstand ΔT1. Im gezeigten Ausführungsbeispiel beträgt der Normal-Zeitabstand ΔT1, wie gehabt, insbesondere 32 Sekunden und der Volumen-Zeitabstand ΔT3 insbesondere 2 Sekunden. Während jedes Temperatur-Erfassungsschritts 16 wird auch ein Volumen-Erfassungsschritt 17 durchgeführt.

Im Sonder-Messraster gemäß Fig. 4 erfolgt die Erfassung der Vorlauftemperatur θV und der Rücklauftemperatur θR wiederkehrend mit einem Sonder-Zeitabstand ΔT2. Der zugehörige Temperatur-Erfassungsschritt ist in Fig. 4 mit dem Bezugszeichen 18 gekennzeichnet. Zwischen zwei Temperatur-Erfassungsschritten 18 wird im gezeigten Ausführungsbeispiel ein Volumen-Erfassungsschritt 17 durchgeführt. Letzterer entspricht den im Normal-Messraster durchgeführten und im Zusammenhang mit Fig. 3 erläuterten Volumen-Erfassungsschritten 17. Grundsätzlich ist möglich, dass anders als beim Ausführungsbeispiel gemäß Fig. 4 zwischen zwei Temperatur-Erfassungsschritten 18 mehr als ein Volumen-Erfassungsschritt 17 durchgeführt wird. Jedenfalls wiederholen sich auch hier die Volumen-Erfassungsschritte 17 zyklisch im Volumen-Zeitabstand ΔT3 von insbesondere 2 Sekunden. Der Sonder-Zeitabstand ΔT2 beträgt im gezeigten Ausführungsbeispiel, wie gehabt, insbesondere 4 Sekunden. Auch hier wird während jedes Temperatur-Erfassungsschritts 18 ebenfalls ein Volumen-Erfassungsschritt 17 durchgeführt.

Das Ausführungsbeispiel gemäß Fig. 5 und 6 unterscheidet sich von dem gemäß Fig. 3 und 4 dadurch, dass zusätzliche Temperatur-Hilfsgrößen-Erfassungsschritte 19 vorhanden sind. Temperatur-Hilfsgrößen CθH werden außer in den Volumen-Erfassungsschritten 17 anhand der dort jeweils erfassten ersten und zweiten Schalllaufzeiten TL1 und TL2 außerdem auch in den zusätzlichen Temperatur-Hilfsgrößen-Erfassungsschritten 19 ermittelt.

Während der Temperatur-Hilfsgrößen-Erfassungsschritte 19 erfolgt die Ermittlung der Temperatur-Hilfsgrößen CθH unabhängig von für die Ermittlung der Durchflussmengen ΔV erfassten ersten und zweiten Schalllaufzeiten TL1, TL2. Der erste Schallwandler 6 wird hier jeweils mit einem elektrischen Sende-Hilfssignal ESH1 (siehe gestrichelte Linie in Fig. 1) angesteuert und so zur Aussendung eines wiederum vorzugsweise impulsförmigen Schallhilfssignals SSH (siehe Fig. 1) veranlasst, welches vom zweiten Schallwandler 7 empfangen und in ein elektrisches Empfangs-Hilfssignal ESH2 (siehe gestrichelte Linie in Fig. 1) umgewandelt wird. In der Steuer- und Auswerteeinheit 12 wird aus den zueinander gehörigen elektrischen Hilfssignalen, also dem Sende-Hilfssignal ESH1 und dem Empfangs-Hilfssignal ESH2, jeweils eine Schallhilfslaufzeit TLH (siehe Fig. 1) des Schallhilfssignals SSH ermittelt, die angibt, wie lange das Schallhilfssignal SSH vom ersten Schallwandler 6 zum zweiten Schallwandler 7 innerhalb des Transportmediums 3 unterwegs ist. Während der zusätzlichen Temperatur-Hilfsgrößen-Erfassungsschritte 19 ist die Ermittlung der auszuwertenden Messgröße, also der Schallhilfslaufzeit TLH, einfacher als während der Volumen-Erfassungsschritte 17. Insbesondere wird das Transportmedium 3 nur in einer Richtung durchschallt. Eine Durchschallung in die entgegengesetzte Richtung findet dagegen nicht statt. Sie ist für die Ermittlung der Temperatur-Hilfsgröße CθH nicht unbedingt erforderlich, da während des zusätzlichen Temperatur-Hilfsgrößen-Erfassungsschritts 19 vorzugsweise keine Durchflussmenge ΔV ermittelt wird. Vielmehr wird die Schallhilfslaufzeit TLH während der zusätzlichen Temperatur-Hilfsgrößen-Erfassungsschritte 19 insbesondere ausschließlich zur Bestimmung der Temperatur-Hilfsgröße CθH ermittelt und ausgewertet.

Die zusätzlichen Temperatur-Hilfsgrößen-Erfassungsschritte 19 werden beim gezeigten Ausführungsbeispiel jeweils zwischen zwei Volumen-Erfassungsschritten 17 durchgeführt. Ein Hilfsgrößen-Zeitabstand ΔT4 zwischen einem solchen zusätzlichen Temperatur-Hilfsgrößen-Erfassungsschritt 19 und dem zeitlich darauf folgenden Volumen-Erfassungsschritt 17 ist ebenfalls erheblich kleiner als der Normal-Zeitabstand ΔT1 und beträgt beim gezeigten Ausführungsbeispiel insbesondere nur eine Sekunde. Der Hilfsgrößen-Zeitabstand ΔT4 ist auch kleiner als der Volumen-Zeitabstand ΔT3. Die Temperatur-Hilfsgrößen CθH werden bei dem Ausführungsbeispiel gemäß Fig. 5 und 6 also in einem noch kürzeren Zeitabstand als bei dem Ausführungsbeispiel gemäß Fig. 3 und 4, nämlich in dem Hilfsgrößen-Zeitabstand ΔT4, ermittelt. Damit kann ein Temperatursprung im Transportmedium 3 noch schneller und genauer erfasst werden.

Nach Erkennen eines solchen Temperatursprungs anhand der Auswertung der Temperatur-Hilfsgrößen CθH erfolgt, wie beim Ausführungsbeispiel gemäß Fig. 3 und 4, eine Umstellung auf das Sonder-Messraster. Die dann herrschenden Verhältnisse sind in Fig. 6 dargestellt. Die Erfassung der Vorlauftemperatur θV und der Rücklauftemperatur θR erfolgt dann wieder mit einem Sonder-Zeitabstand ΔT2, verglichen mit dem der Hilfsgrößen-Zeitabstand ΔT4 ebenfalls kürzer ist. Auch im Sonder-Messraster werden die zusätzlichen Temperatur-Hilfsgrößen-Erfassungsschritte 19 durchgeführt. Ansonsten besteht aber kein Unterschied im Vergleich zu den in Fig. 4 gezeigten Verhältnissen.

Der Energiezähler 1 hat die Sensor-Temperaturerfassung mit dem adaptiven Messraster, um den Verbrauch an elektrischer Versorgungsenergie zu optimieren insbesondere zu minimieren und zugleich eine verbesserte Messgenauigkeit zu erzielen. Die Sensor-Temperaturerfassung erfolgt während der Verwendung des Sonder-Messrasters häufiger als während der Verwendung des Normal-Messrasters, wodurch zwar zum einen die gewünschte Verbesserung der Messgenauigkeit, zum anderen aber auch ein höherer Energiebedarf resultiert. Um diesen höheren Energiebedarf nicht unnötig anfallen zu lassen, wird das Sonder-Messraster nur dann verwendet, wenn es für eine Verbesserung der Messgenauigkeit des Energiezählers 1 sinnvoll ist. Dies ist insbesondere dann der Fall, wenn sich die Temperaturverhältnisse im Transportmedium 3 maßgeblich verändern und eine thermische Sondersituation vorliegt. Das Kriterium für eine Umschaltung vom Normal-Messraster in das energieintensivere Sonder-Messraster ist das Erkennen einer sprunghaften Temperaturveränderung im Transportmedium 3.

Die Steuer- und Auswerteinheit 12 des Energiezählers 1 ist deshalb dazu ausgelegt, eine solche sprunghafte Temperaturveränderung im Transportmedium 3 zu erkennen. Ein Beispiel für eine solche sprunghafte Temperaturveränderung ist in der zweiten Zeitspanne 14 im Diagramm gemäß Fig. 2 gezeigt. Allerdings lassen sich diese sprunghaften Temperaturveränderungen nicht oder zumindest nicht besonders effizient über die übliche Sensor-Temperaturerfassung mittels der beiden Temperatursensoren 8, 9 ermitteln, da diese Erfassungen unter Normalbedingungen nur in den relativ großen Normal-Zeitabständen ΔT1 erfolgen, so dass zeitlich dazwischen auftretende Temperatursprünge übersehen würden.

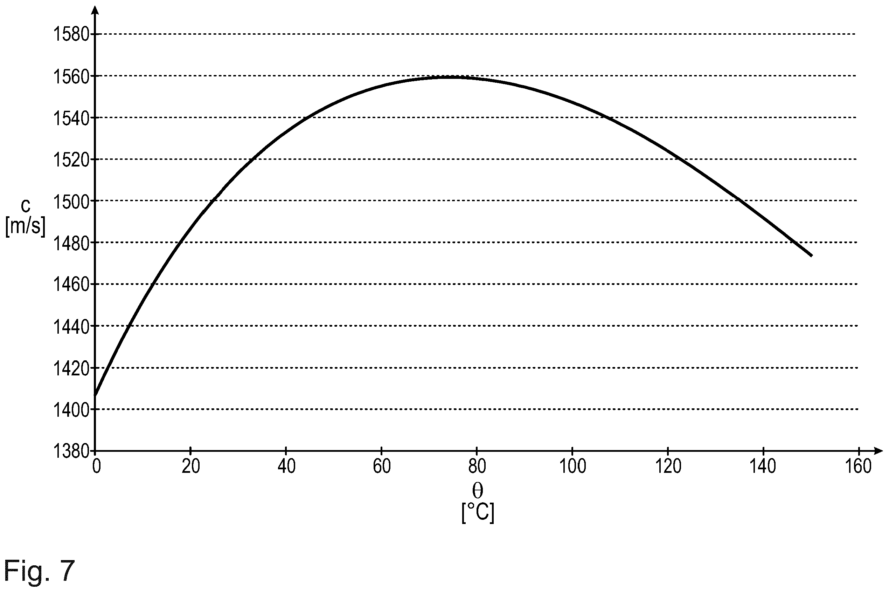

Insofern ist der Energiezähler 1 mit einer von der Sensor-Temperaturerfassung verschiedenen zusätzlichen Temperatur-Hilfsgrößenerfassung ausgestattet. Die Steuer-und Auswerteinheit 12 ist dazu ausgelegt, diese Temperatur-Hilfsgrößenerfassungen durchzuführen. Auch die Temperatur-Hilfsgrößenerfassungen erfolgen zeitlich wiederkehrend. Sie basieren auf der Abhängigkeit der Schalllaufzeiten TL1, TL2, TLH oder der Schallgeschwindigkeiten c von der Temperatur θ. Der Zusammenhang zwischen der Temperatur θ und der Schallgeschwindigkeit c ist in dem Diagramm gemäß Fig. 7 wiedergegeben.

Da die Strecke, die die Schallsignale SS1, SS2, SSH innerhalb des Transportmediums 3 zurücklegen, bekannt und insbesondere auch zumindest im Wesentlichen konstant ist, besteht ein fester mathematischer Zusammenhang zwischen den Schalllaufzeiten TL1, TL2, TLH und den zugehörigen Schallgeschwindigkeiten c. Die Größen sind durch eine einfache Kehrwertbildung miteinander verknüpft. Folglich lassen sich sowohl die Schalllaufzeiten TL1, TL2, TLH als auch die zugehörigen Schallgeschwindigkeiten c aus den mittels der Schallwandler 6, 7 durchgeführten Messungen ermitteln. Die für die Ermittlung der Durchflussmengen ΔV ohnehin und außerdem zyklisch mit dem kurzen Volumen-Zeitabstand ΔT3 erfassten Schalllaufzeiten TL1 und TL2, lassen sich zusätzlich auch im Rahmen der Temperatur-Hilfsgrößenerfassungen auswerten. Die Schalllaufzeiten TLH werden dagegen gezielt und insbesondere ausschließlich für die Auswertung im Rahmen der Temperatur-Hilfsgrößenerfassungen ermittelt.

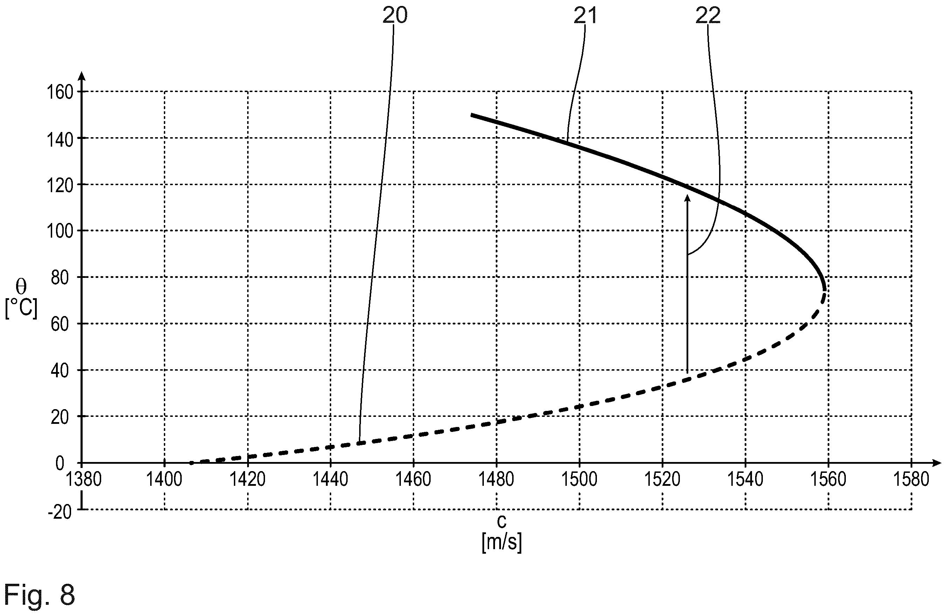

Für diese Auswertung ist ein numerisch nachgebildeter Verlauf der Abhängigkeit zwischen Schallgeschwindigkeit c bzw. Schalllaufzeiten TL1, TL2 oder TLH einerseits und Temperatur θ andererseits in der Steuer- und Auswerteinheit 12 hinterlegt. Die hinterlegte Kurve ist in Fig. 8 exemplarisch für tatsächliche Werte der Temperatur θ gezeigt. Die Temperatur θ stellt somit ein Beispiel für eine Temperatur-Hilfsgröße CθH dar. Alternativ kann in der Steuer- und Auswerteinheit 12 anstelle für die tatsächliche Temperatur θ ein Zusammenhang für eine andere Temperatur-Hilfsgröße CθH hinterlegt sein. Für das Erkennen eines relevanten Temperatursprungs im Transportmedium 3 ist es nicht zwingend erforderlich tatsächliche Temperaturwerte zu analysieren. Jedenfalls enthält die hinterlegte Kurve einen unteren Ast 20 sowie einen oberen Ast 21. Für beide Äste 20, 21 lässt sich jeweils eine geschlossene mathematische Gleichung insbesondere in Form eines Polynoms höherer Ordnung, beispielsweise fünfter Ordnung, angeben. Konstanten, die gegebenenfalls für die Polynom-Gleichungen benötigt werden, lassen sich z.B. durch Kalibrierungsmessungen ermitteln. Die Gleichungen zu beiden Ästen 20, 21 sind in der Steuer- und Auswerteinheit 12 hinterlegt. Damit erhält man eine sehr gute Nachbildung der tatsächlichen in Fig. 7 dargestellten Abhängigkeit zwischen Schallgeschwindigkeit c und Temperatur θ. Diese Abhängigkeit ist mehrdeutig. Einem Wert der Schallgeschwindigkeit c sind zwei mögliche Werte der Temperatur θ zugeordnet.

Solange sich die Temperaturverhältnisse, wie in der Praxis häufig üblich, entweder ausschließlich im unteren Ast 20 oder ausschließlich im oberen Ast 21 bewegen, lässt sich aus den über die Schalllaufzeiterfassungen ermittelten Schallgeschwindigkeiten c aber dennoch jeweils ein eindeutig zugehöriger Wert der Temperatur θ bzw. einer anderen Temperatur-Hilfsgröße CθH ermitteln, nämlich durch einfaches Einsetzen der jeweiligen Schallgeschwindigkeit c in die hinterlegte Polynom-Gleichung des unteren oder oberen Astes 20 bzw. 21. Die verwendete Schallgeschwindigkeit c kann dabei insbesondere direkt aus einer der erfassten Schall(hilfs)-laufzeiten TL1, TL2, TLH oder aus dem arithmetischen Mittelwert der ersten und zweiten Schalllaufzeiten TL1 und TL2 in und gegen die Flussrichtung 5 des Transportmediums 3 ermittelt werden.

Anhand der so mit einem der beiden kurzen Zeitabstände, also mit dem Volumen-Zeitabstand ΔT3 oder dem Hilfsgrößen-Zeitabstand ΔT4, ermittelten Kontroll-Werte der Temperatur θ bzw. einer anderen Temperatur-Hilfsgröße CθH wird in der Steuer- und Auswerteinheit 12 eine Überprüfung durchgeführt, ob eine thermische Sondersituation mit einer sprunghaften Temperaturveränderung vorliegt. Dazu werden insbesondere zeitlich nacheinander entweder im Volumen-Zeitabstand ΔT3 oder im Hilfsgrößen-Zeitabstand ΔT4 ermittelte Kontroll-Werte der Temperatur θ bzw. einer anderen Temperatur-Hilfsgröße CθH miteinander verglichen. Eine dabei festgestellte Abweichung von bzw. entsprechend insbesondere mindestens 2,5 K wertet oder erkennt die Steuer- und Auswerteinheit 12 als sprunghafte Temperaturveränderung, woraufhin bei der Sensor-Temperaturerfassung die Verwendung des Normal-Messrasters auf die Verwendung des Sonder-Messrasters umgeschaltet wird. Nach dem so erkannten Vorliegen einer sprunghaften Temperaturänderung im Transportmedium 3 erfolgen die zeitlich wiederkehrenden Sensor-Temperaturerfassungen mittels der Temperatursensoren 8, 9 dann mit dem verglichen mit dem Normal-Zeitabstand ΔT1 kürzeren Sonder-Zeitabstand ΔT2.

Für den Fall, dass sich die Temperaturverhältnisse ausnahmsweise nicht ausschließlich im unteren Ast 20 oder ausschließlich im oberen Ast 21 bewegen, sondern beispielsweise ein großer Temperatursprung 22 von einem auf den anderen der beiden Äste 20, 21 vorliegt, wird in der Steuer- und Auswerteeinheit 12 bei der Temperatur-Hilfsgrößenerfassung zumindest eine weitere Temperaturabhängigkeit ausgewertet, um die dann relevante Mehrdeutigkeit der Abhängigkeit zwischen Schallgeschwindigkeit c und Temperatur θ bzw. anderer Temperatur-Hilfsgröße CθH korrekt zu berücksichtigen.

Als weitere temperaturabhängige Messgrößen kommen insbesondere eine Resonanzfrequenz zumindest eines der beiden Schallwandler 6, 7 und/oder eine Signalamplitude und/oder eine Einhüllende jeweils des Empfangs-Hilfssignals ESH2 oder des Empfangs-Anteils zumindest eines der elektrischen Signale ES1, ES2 in Betracht. Durch Auswertung zumindest einer dieser weiteren temperaturabhängigen Messgrößen wird in der Steuer- und Auswerteinheit 12 überprüft, ob ein großer Temperatursprung 22 von einem auf den anderen der beiden Äste 20, 21 vorliegt und welcher der beiden Äste 20, 21 nach dem großen Temperatursprung 22 maßgeblich ist und demnach für die Ermittlung eines korrekten Kontroll-Werts der Temperatur θ bzw. einer anderen Temperatur-Hilfsgröße CθH zu verwenden ist.

Insgesamt bietet der Energiezähler 1 somit sowohl eine hohe Messgenauigkeit auch bei abrupten sprunghaften Temperaturveränderungen im Transportmedium 3 als auch aufgrund des bei der Sensor-Temperaturerfassung verwendeten adaptiven Messrasters einen niedrigen Energieverbrauch.

## Patentansprüche

1. Energiezähler zur schallbasierten Erfassung einer mittels eines Transportmediums (3) an einen Verbraucher (4) gelieferten Wärme- oder Kältemenge aufweisend:
a) einen ersten und einen zweiten Schallwandler (6, 7) jeweils zur Übermittlung von Schallsignalen (SS1, SS2; SSH) durch das Transportmedium (3) zum jeweils anderen Schallwandler (7, 6),
b) einen ersten Temperatursensor (8) für einen Vorlauf des Transportmediums (3) und einen zweiten Temperatursensor (9) für einen Rücklauf des Transportmediums (3), und
c) eine Steuer- und Auswerteeinheit (12), an die der erste und der zweite Schallwandler (6, 7) sowie der erste und der zweite Temperatursensor (8, 9) anschließbar sind, wobei
d) die Steuer- und Auswerteeinheit (12) dazu ausgelegt ist,
d1) zeitlich wiederkehrend Schalllaufzeiten (TL1, TL2; TLH) oder Schallgeschwindigkeiten (c) der Schallsignale (SS1, SS2; SSH) innerhalb des Transportmediums (3) zu ermitteln,
d2) zeitlich wiederkehrend Sensor-Temperaturerfassungen mittels des ersten und des zweiten Temperatursensors (8, 9) vorzunehmen,
d3) eine thermische Sondersituation mit einer sprunghaften Temperaturveränderung im Transportmedium (3) mittels einer von der Sensor-Temperaturerfassung verschiedenen zeitlich wiederkehrenden Temperatur-Hilfsgrößenerfassung zu erkennen, und
d4) die zeitlich wiederkehrenden Sensor-Temperaturerfassungen nach Erkennung einer sprunghaften Temperaturveränderung mit einem kürzeren Zeitabstand (ΔT2) vorzunehmen, **dadurch gekennzeichnet, dass** die Steuer- und Auswerteeinheit (12) derart ausgelegt ist,
d5) bei der Temperatur-Hilfsgrößenerfassung eine Temperaturabhängigkeit der ermittelten Schalllaufzeit (TL1, TL2; TLH) oder Schallgeschwindigkeit (c) auszuwerten.

2. Energiezähler nach Anspruch 1, **dadurch gekennzeichnet, dass** die Steuer- und Auswerteeinheit (12) dazu ausgelegt ist, bei der Temperatur-Hilfsgrößenerfassung eine Temperaturabhängigkeit zumindest einer der Größen aus einer Resonanzfrequenz zumindest eines der beiden Schallwandler (6, 7), einer Signalamplitude eines elektrischen Empfangssignals (ES1, ES2; ESH2) zumindest eines der beiden Schallwandler (6, 7) und einer Einhüllenden eines elektrischen Empfangssignals (ES1, ES2; ESH2) zumindest eines der beiden Schallwandler (6, 7) auszuwerten.

3. Energiezähler nach einem der vorhergehenden Ansprüche, **dadurch gekennzeichnet, dass** die Steuer- und Auswerteeinheit (12) dazu ausgelegt ist, die zeitlich wiederkehrende Ermittlung der Schalllaufzeiten (TL1, TL2; TLH) oder Schallgeschwindigkeiten (c) in einem kürzeren Zeitabstand (ΔT3; ΔT4) vorzunehmen als die zeitlich wiederkehrenden Sensor-Temperaturerfassungen unter Normalbedingungen.

4. Energiezähler nach einem der vorhergehenden Ansprüche, **dadurch gekennzeichnet, dass** die Steuer- und Auswerteeinheit (12) dazu ausgelegt ist, zumindest einen Teil der Schalllaufzeiten (TLH) oder Schallgeschwindigkeiten (c) ausschließlich für die Temperatur-Hilfsgrößenerfassung zu ermitteln und auszuwerten.

5. Energiezähler nach einem der vorhergehenden Ansprüche, **dadurch gekennzeichnet, dass** die Steuer- und Auswerteeinheit (12) dazu ausgelegt ist, bei den zeitlich wiederkehrenden Sensor-Temperaturerfassungen von der Verwendung des kürzeren Zeitabstands (ΔT2) nach Erkennung einer sprunghaften Temperaturveränderung wieder umzustellen auf die Verwendung eines längeren Zeitabstands (ΔT1).

6. Energiezähler nach einem der vorhergehenden Ansprüche, **dadurch gekennzeichnet, dass** die Steuer- und Auswerteeinheit (12) dazu ausgelegt ist, den nach Erkennung einer sprunghaften Temperaturveränderung bei den zeitlich wiederkehrenden Sensor-Temperaturerfassungen verwendeten kürzeren Zeitabstand (ΔT2) auf einen Wert einzustellen, der um einen Faktor im Bereich zwischen 2 und 20, insbesondere zwischen 5 und 10, kleiner ist als unter Normalbedingungen.

7. Energiezähler nach einem der vorhergehenden Ansprüche, **dadurch gekennzeichnet, dass** die Steuer- und Auswerteeinheit (12) dazu ausgelegt ist, eine Temperaturveränderung des Transportmediums (3) als eine sprunghafte zu erkennen, wenn sie mindestens 10K, insbesondere mindestens 5 K, vorzugsweise mindestens 2,5 K beträgt.

8. Verfahren zur schallbasierten Erfassung einer mittels eines Transportmediums (3) an einen Verbraucher (4) gelieferten Wärme- oder Kältemenge, bei dem
a) innerhalb des Transportmediums (3) Schallsignale (SS1, SS2; SSH) zwischen einem ersten und einem zweiten Schallwandler (6, 7) übermittelt werden,
b) im Rahmen einer zeitlich wiederkehrenden Sensor-Temperaturerfassung jeweils eine Vorlauftemperatur (θV) des Transportmediums (3) mittels eines ersten Temperatursensors (8) und eine Rücklauftemperatur (θR) des Transportmediums (3) mittels eines zweiten Temperatursensors (9) bestimmt werden,
c) zeitlich wiederkehrend Schalllaufzeiten (TL1, TL2; TLH) oder Schallgeschwindigkeiten (c) der Schallsignale (SS1, SS2; SSH) innerhalb des Transportmediums (3) ermittelt werden,
d) eine thermische Sondersituation mit einer sprunghaften Temperaturveränderung im Transportmedium (3) mittels einer von der Sensor-Temperaturerfassung verschiedenen zeitlich wiederkehrenden Temperatur-Hilfsgrößenerfassung erkannt wird, und
e) die zeitlich wiederkehrenden Sensor-Temperaturerfassungen nach Erkennung einer sprunghaften Temperaturveränderung mit einem kürzeren Zeitabstand (ΔT2) vorgenommen werden, **dadurch gekennzeichnet, dass**
f) bei der Temperatur-Hilfsgrößenerfassung eine Temperaturabhängigkeit der ermittelten Schalllaufzeit (TL1, TL2; TLH) oder Schallgeschwindigkeit (c) ausgewertet wird.

9. Verfahren nach Anspruch 8, **dadurch gekennzeichnet, dass** bei der Temperatur-Hilfsgrößenerfassung eine Temperaturabhängigkeit zumindest einer der Größen aus einer Resonanzfrequenz zumindest eines der beiden Schallwandler (6, 7), einer Signalamplitude eines elektrischen Empfangssignals (ES1, ES2; ESH2) zumindest eines der beiden Schallwandler (6, 7) und einer Einhüllenden eines elektrischen Empfangssignals (ES1, ES2; ESH2) zumindest eines der beiden Schallwandler (6, 7) ausgewertet wird.

10. Verfahren nach Anspruch 8 oder 9, **dadurch gekennzeichnet, dass** die zeitlich wiederkehrende Ermittlung der Schalllaufzeiten (TL1, TL2; TLH) oder Schallgeschwindigkeiten (c) in einem kürzeren Zeitabstand (ΔT3; ΔT4) vorgenommen wird als die zeitlich wiederkehrenden Sensor-Temperaturerfassungen unter Normalbedingungen.

11. Verfahren nach einem der Ansprüche 8 bis 10, **dadurch gekennzeichnet, dass** zumindest ein Teil der Schalllaufzeiten (TLH) oder Schallgeschwindigkeiten (c) ausschließlich für die Temperatur-Hilfsgrößenerfassung ermittelt und ausgewertet werden.

12. Verfahren nach einem der Ansprüche 8 bis 11, **dadurch gekennzeichnet, dass** bei den zeitlich wiederkehrenden Sensor-Temperaturerfassungen die Verwendung des kürzeren Zeitabstands (ΔT2) nach Erkennung einer sprunghaften Temperaturveränderung wieder umgestellt wird auf die Verwendung eines längeren Zeitabstands (ΔT1).

13. Verfahren nach einem der Ansprüche 8 bis 12, **dadurch gekennzeichnet, dass** der nach Erkennung einer sprunghaften Temperaturveränderung bei den zeitlich wiederkehrenden Sensor-Temperaturerfassungen verwendete kürzere Zeitabstand (ΔT2) auf einen Wert eingestellt wird, der um einen Faktor im Bereich zwischen 2 und 20, insbesondere zwischen 5 und 10, kleiner ist als unter Normalbedingungen.

14. Verfahren nach einem der Ansprüche 8 bis 13, **dadurch gekennzeichnet, dass** eine Temperaturveränderung des Transportmediums (3) als eine sprunghafte erkannt wird, wenn sie mindestens 10K, insbesondere mindestens 5 K, vorzugsweise mindestens 2,5 K beträgt.

## Claims

1. Energy meter for the sound-based detection of a quantity of heat or cold supplied to a consumer (4) by means of a transport medium (3):
a) a first and a second sound transducer (6, 7) each for transmitting sound signals (SS1, SS2; SSH) through the transport medium (3) to the respective other sound transducer (7, 6),
b) a first temperature sensor (8) for a forward flow of the transport medium (3) and a second temperature sensor (9) for a return flow of the transport medium (3), and
c) a control and evaluation unit (12) to which the first and second sound transducers (6, 7) and the first and second temperature sensors (8, 9) can be connected, wherein
d) the control and evaluation unit (12) is designed
d1) to determine sound propagation times (TL1, TL2; TLH) or sound velocities (c) of the sound signals (SS1, SS2; SSH) within the transport medium (3),
d2) to carry out recurring sensor temperature measurements by means of the first and second temperature sensors (8, 9),
d3) to recognize a special thermal situation with a sudden temperature change in the transport medium (3) by means of a temporally recurring temperature auxiliary variable detection which differs from the sensor temperature detection, and
d4) to carry out the temporally recurring sensor temperature detections after detection of a sudden temperature change with a shorter time interval (ΔT2), **characterized in that** the control and evaluation unit (12) is designed in such a way as
d5) to evaluate a temperature dependence of the determined sound propagation time (TL1, TL2; TLH) or sound velocity (c) during the temperature auxiliary variable detection.

2. Energy meter according to claim 1, **characterized in that** the control and evaluation unit (12) is designed to, during the temperature auxiliary variable detection, detect a temperature dependence of at least one of the variables from a resonant frequency of at least one of the two sound transducers (6, 7), a signal amplitude of an electrical received signal (ES1, ES2; ESH2) of at least one of the two sound transducers (6, 7) and an envelope of an electrical received signal (ES1, ES2; ESH2) of at least one of the two sound transducers (6, 7).

3. Energy meter according to any one of the preceding claims, **characterized in that** the control and evaluation unit (12) is designed to carry out the temporally recurring determination of the sound propagation times (TL1, TL2; TLH) or sound velocities (c) at a shorter time interval (ΔT3; ΔT4) than the temporally recurring sensor temperature detections under normal conditions.

4. Energy meter according to any one of the preceding claims, **characterized in that** the control and evaluation unit (12) is designed to determine and evaluate at least a portion of the sound propagation times (TLH) or sound velocities (c) exclusively for the purpose of temperature auxiliary variable detection.

5. Energy meter according to any one of the preceding claims, **characterized in that** the control and evaluation unit (12) is designed, in the case of temporally recurring sensor temperature measurements, to switch from the use of the shorter time interval (ΔT2) to the use of a longer time interval (ΔT1) after detection of a sudden temperature change.

6. Energy meter according to any one of the preceding claims, **characterized in that** the control and evaluation unit (12) is designed to set the shorter time interval (ΔT2) used after detection of a sudden temperature change in case of the temporally recurring sensor temperature detections to a value which is smaller by a factor in the range between 2 and 20, in particular between 5 and 10, than under normal conditions.

7. Energy meter according to any one of the preceding claims, **characterized in that** the control and evaluation unit (12) is designed to recognize a temperature change in the transport medium (3) as a sudden temperature change if it is at least 10 K, in particular at least 5 K, preferably at least 2.5 K.

8. Method for the sound-based detection of a quantity of heat or cold delivered to a consumer (4) by means of a transport medium (3), in which
a) sound signals (SS1, SS2; SSH) are transmitted within the transport medium (3) between a first and a second sound transducer (6, 7),
b) a flow temperature (θV) of the transport medium (3) is determined by means of a first temperature sensor (8) and a return temperature (θR) of the transport medium (3) is determined by means of a second temperature sensor (9) as part of a time-recurring sensor temperature detection,
c) temporally recurring sound propagation times (TL1, TL2; TLH) or sound velocities (c) of the sound signals (SS1, SS2; SSH) within the transport medium (3) are determined,
d) a special thermal situation with a sudden temperature change in the transport medium (3) is recognized by means of a temporally recurring temperature auxiliary variable detection which differs from the sensor temperature detection, and
e) the temporally recurring sensor temperature detections are carried out with a shorter time interval (ΔT2) after detection of a sudden temperature change, **characterized in that**
f) during the temperature auxiliary variable detection, a temperature dependence of the determined sound propagation time (TL1, TL2; TLH) or sound velocity (c) is evaluated.

9. Method according to claim 8, **characterized in that**, in the temperature auxiliary variable detection, a temperature dependence of at least one of the quantities from a resonant frequency of at least one of the two sound transducers (6, 7), a signal amplitude of an electrical received signal (ES1, ES2; ESH2) of at least one of the two sound transducers (6, 7) and an envelope of an electrical received signal (ES1, ES2; ESH2) of at least one of the two sound transducers (6, 7) is evaluated.

10. Method according to claim 8 or 9, **characterized in that** the temporally recurring determination of the sound propagation times (TL1, TL2; TLH) or sound velocities (c) is carried out at a shorter time interval (ΔT3; ΔT4) than the temporally recurring sensor temperature detections under normal conditions.

11. Method according to one of claims 8 to 10, **characterized in that** at least a portion of the sound propagation times (TLH) or sound velocities (c) is determined and evaluated exclusively for the purpose of temperature auxiliary variable detection.

12. Method according to one of claims 8 to 11, **characterized in that**, in the case of the recurring sensor temperature detections, the use of the shorter time interval (ΔT2) is switched back to the use of a longer time interval (ΔT1) after detection of a sudden change in temperature.

13. Method according to one of claims 8 to 12, **characterized in that** the shorter time interval (ΔT2) used after detection of a sudden temperature change in the recurring sensor temperature detections is set to a value which is smaller by a factor in the range between 2 and 20, in particular between 5 and 10, than under normal conditions.

14. Method according to one of claims 8 to 13, **characterized in that** a temperature change in the transport medium (3) is recognized as a sudden change if it is at least 10 K, in particular at least 5 K, preferably at least 2.5 K.

## Revendications

1. Compteur d'énergie pour la détection acoustique d'une quantité de chaleur ou de froid livrée à un consommateur (4) au moyen d'un milieu de transport (3) présentant :
a) un premier et un second transducteurs acoustiques (6, 7) respectivement destinés à transmettre des signaux acoustiques (SS1, SS2 ; SSH) à travers le milieu de transport (3) respectivement vers l'autre transducteur acoustique (7, 6),
b) un premier capteur de température (8) pour une arrivée du milieu de transport (3) et un second capteur de température (9) pour un retour du milieu de transport (3), et
c) une unité de commande et d'évaluation (12) à laquelle le premier et le second transducteurs acoustiques (6, 7) peuvent être raccordés ainsi que le premier et le second capteur de température (8, 9), dans lequel
d) l'unité de commande et d'évaluation (12) est conçue de sorte à
d1) déterminer de manière récurrente des temps de propagation du son (TL1, TL2 ; TLH) ou des vitesses du son (c) des signaux sonores (SS1, SS2 ; SSH) à l'intérieur du milieu de transport (3),
d2) effectuer des détections de température par capteur récurrentes dans le temps au moyen des premier et second capteurs de température (8, 9),
d3) détecter une situation thermique particulière avec un changement brusque de température dans le milieu de transport (3) au moyen d'une détection auxiliaire de température récurrente dans le temps différente de la détection de température par capteur, et
d4) effectuer des détections de température par capteur récurrentes dans le temps avec un intervalle de temps plus court (ΔT2) après la détection d'un changement brusque de température, **caractérisé en ce que** l'unité de commande et d'évaluation (12) est conçue de sorte à
d5) évaluer, lors de la détection auxiliaire de température, une dépendance à la température du temps de propagation du son (TL1, TL2 ; TLH) ou de la vitesse du son (c) déterminée.

2. Compteur d'énergie selon la revendication 1, **caractérisé en ce que** l'unité de commande et d'évaluation (12) est conçue pour évaluer, lors de la détection auxiliaire de température, une dépendance à la température d'au moins une des grandeurs parmi une fréquence de résonance d'au moins un des deux transducteurs acoustiques (6, 7), une amplitude de signal d'un signal de réception électrique (ES1, ES2 ; ESH2) d'au moins un des deux transducteurs acoustiques (6, 7) et une enveloppe d'un signal électrique reçu (ES1, ES2 ; ESH2) d'au moins un des deux transducteurs acoustiques (6, 7).

3. Compteur d'énergie selon l'une quelconque des revendications précédentes, **caractérisé en ce que** l'unité de commande et d'évaluation (12) est conçue pour effectuer la détermination récurrente dans le temps des temps de propagation du son (TL1, TL2 ; TLH) ou des vitesses du son (c) à un intervalle de temps plus court (ΔT3 ; ΔT4) que les détections de température par capteur récurrentes dans le temps en conditions normales.

4. Compteur d'énergie selon l'une quelconque des revendications précédentes, **caractérisé en ce que** l'unité de commande et d'évaluation (12) est conçue pour déterminer et évaluer au moins une partie des temps de propagation du son (TLH) ou des vitesses du son (c) exclusivement pour la détection auxiliaire de température.

5. Compteur d'énergie selon l'une quelconque des revendications précédentes, **caractérisé en ce que** l'unité de commande et d'évaluation (12) est conçue pour passer, lors des détections de température par capteur récurrentes dans le temps, de l'utilisation de l'intervalle de temps plus court (ΔT2) à l'utilisation d'un intervalle de temps plus long (ΔT1) après la détection d'un changement brusque de température.

6. Compteur d'énergie selon l'une quelconque des revendications précédentes, **caractérisé en ce que** l'unité de commande et d'évaluation (12) est conçue pour régler l'intervalle de temps plus court (ΔT2) utilisé après la détection d'un changement brusque de température lors des détections de température par capteur récurrentes dans le temps à une valeur qui est inférieure d'un facteur entre 2 et 20, en particulier entre 5 et 10, à celui en conditions normales.

7. Compteur d'énergie selon l'une quelconque des revendications précédentes, **caractérisé en ce que** l'unité de commande et d'évaluation (12) est conçue pour détecter un changement de température du milieu de transport (3) comme étant brusque lorsqu'elle est d'au moins 10 K, en particulier d'au moins 5 K, de préférence d'au moins 2,5 K.

8. Procédé de détection acoustique d'une quantité de chaleur ou de froid livrée à un consommateur (4) au moyen d'un milieu de transport (3), dans lequel :
a) des signaux acoustiques (SS1, SS2 ; SSH) sont transmis à l'intérieur du milieu de transport (3) entre un premier et un second transducteur acoustique (6, 7),
b) dans le cadre d'une détection de température par capteur récurrente dans le temps, une température d'arrivée (θV) du milieu de transport (3) est déterminée au moyen d'un premier capteur de température (8) et une température de retour (θR) du milieu de transport (3) est déterminée au moyen d'un second capteur de température (9),
c) des temps de propagation du son (TL1, TL2 ; TLH) ou des vitesses du son (c) récurrents dans le temps des signaux sonores (SS1, SS2 ; SSH) à l'intérieur du milieu de transport (3) sont déterminés,
d) une situation thermique particulière avec un changement brusque de température dans le milieu de transport (3) est détectée au moyen d'une détection auxiliaire de température récurrente dans le temps différente de la détection de température par capteur, et
e) les détections de température par capteur récurrentes dans le temps sont effectuées à un intervalle plus court (ΔT2) après la détection d'un changement brusque de température, **caractérisé en ce que**
f) lors de la détection auxiliaire de température, une dépendance à la température du temps de propagation du son (TL1, TL2 ; TLH) ou de la vitesse du son (c) déterminée est évaluée.

9. Procédé selon la revendication 8, **caractérisé en ce que** lors de la détection auxiliaire de température, une dépendance à la température d'au moins une des grandeurs est évaluée parmi une fréquence de résonance d'au moins un des deux transducteurs acoustiques (6, 7), une amplitude de signal d'un signal de réception électrique (ES1, ES2 ; ESH2) d'au moins un des deux transducteurs acoustiques (6, 7) et une enveloppe d'un signal électrique reçu (ES1, ES2 ; ESH2) d'au moins un des deux transducteurs acoustiques (6, 7).

10. Procédé selon la revendication 8 ou 9, **caractérisé en ce que** la détermination récurrente dans le temps des temps de propagation du son (TL1, TL2 ; TLH) ou des vitesses du son (c) est effectuée à un intervalle de temps plus court (ΔT3 ; ΔT4) que les détections de température par capteur récurrentes dans le temps en conditions normales.

11. Procédé selon l'une quelconque des revendications 8 à 10, **caractérisé en ce qu'**au moins une partie des temps de propagation du son (TLH) ou des vitesses du son (c) est déterminée et évaluée exclusivement pour la détection auxiliaire de température.

12. Procédé selon l'une quelconque des revendications 8 à 11, **caractérisé en ce que**, lors des détections de température par capteur récurrentes dans le temps, l'utilisation de l'intervalle de temps plus court (ΔT2) repasse à l'utilisation d'un intervalle de temps plus long (ΔT1) après la détection d'un changement brusque de température.

13. Procédé selon l'une quelconque des revendications 8 à 12, **caractérisé en ce que** l'intervalle de temps plus court (ΔT2) utilisé après la détection d'un changement brusque de température lors des détections de température par capteur récurrentes dans le temps est réglé sur une valeur qui est inférieure d'un facteur entre 2 et 20, en particulier entre 5 et 10, à celui en conditions normales.

14. Procédé selon l'une quelconque des revendications 8 à 13, **caractérisé en ce qu'**un changement de température du milieu de transport (3) est reconnu comme brusque lorsqu'elle est d'au moins 10 K, en particulier d'au moins 5 K, de préférence d'au moins 2,5 K.
